# EUROPEAN PATENT APPLICATION

(11) **EP 3 590 465 A1**
(43) Date of publication of application: **08.01.2020**
(21) Application number: 17898565.1
(22) Date of filing: 12.12.2017
(51) Int. Cl.: A61C 13/10, A61C 8/00, A61C 13/01

(54) **RESIN BASE AND DENTURE BASE SYSTEM**

(30) Priority: 28.02.2017 JP 2017037654
(71) Applicant: GC Corporation, Sunto-gun, Shizuoka 410-1307 (JP)
(72) Inventor: SATO, Fumiya, Tokyo 174-8585 (JP); MICHII, Takayuki, Tokyo 174-8585 (JP); AKAGI, Takuya, Tokyo 174-8585 (JP)
(74) Representative: Müller-Boré & Partner Patentanwälte PartG mbB
(86) International application number: PCT/JP2017/044531
(87) International publication number: WO 2018/159059

(57) **Abstract**

In one mode of the present invention, a resin plate is manufactured by processing a resin disk using CAD/CAM, and an access hole for screw fixation is formed in the resin plate.

## Description

### [Technical Field]

The present invention relates to a resin plate and dentures plate system.

### [Background Art]

Dentures (sets of artificial teeth) include partial dentures (a partial set of artificial teeth) and complete dentures (a complete set of artificial teeth).

The partial dentures (the partial set of artificial teeth) compensate locally for the function of the lost tooth when a part of the teeth in the maxilla and/or mandible is lost.

The complete dentures (the complete set of artificial teeth) compensate for the lost tooth function when all teeth in the maxilla and/or mandible are lost.

Here, the dentures (the sets of artificial teeth) have an artificial tooth and a resin plate, but is less stable in the oral cavity.

On the other hand, implant dentures (removable implants) are attached to the fixture (artificial root) by an attachment (see, e.g., Patent Document 1).

As the attachment, a ball attachment, a bar attachment, a magnet attachment, etc. are used.

### [Background Art Document]

### [Patent Document]

[Patent Document 1] International Patent Publication No. 2012/132057

### [Summary of the Invention]

### [Problem to be Solved by the Invention]

However, it is desirable to further improve stability of implant dentures in an oral cavity.

If a resin plate is manufactured using a tray resin, the strength of the resin plate may be insufficient. In addition, it is necessary to polish the resin plate to adjust the shape.

One mode of the present invention is directed to providing a resin plate that is excellent in strength, easy to adjust shape, and capable of improving the stability of the dentures in the oral cavity.

### [Means for Solving Problems]

In one mode of the present invention, a resin disk is processed by CAD/CAM to manufacture a resin plate, and a access hole for screw fixation is formed in the resin plate.

According to one aspect of the present invention, a resin plate includes a resin having bending strength from 50 to 150 MPa (by JIS T 6518) and Vickers hardness from 12 to 28 Hv0.2, or a resin having bending strength from 50 to 300MPa (by JIS T 6517) and Vickers hardness from 18 to 110 Hv0.2, and includes an access hole for screw fixation formed therein.

### [Effect of the Invention]

According to one mode of the present invention, a resin plate can be provided that is excellent in strength, easy to adjust its shape, and capable of improving the stability of the dentures in the oral cavity.

### [Brief Description of the Drawings]

FIG. 1 illustrates an example of a resin plate according to the present embodiment.
FIG. 2 illustrates an example of a dentures plate system according to the present embodiment.
FIG. 3 illustrates an example of a method of using the dentures plate system of FIG. 2.
FIG. 4 illustrates an example of a method of using the dentures plate system of FIG. 2.
FIG. 5 illustrates another example of the dentures plate system according to the present embodiment.
FIG. 6 illustrates an example of a method of using the dentures plate system of FIG. 5.

### [Mode of Carrying Out the Invention]

Next, an embodiment of the present invention will be described.

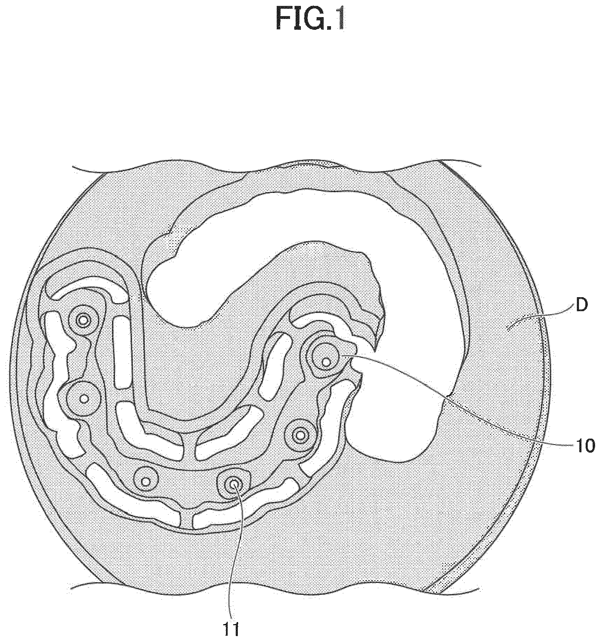

FIG. 1 illustrates an example of a resin plate of the present embodiment.

The resin plate 10 is for complete dentures and is manufactured by processing a resin disk D with known CAD/CAM. Therefore, the resin plate 10 is excellent in strength and easy to adjust the shape.

The resin disk D is provided for CAD/CAM processing and ordinarily has bending strength and Vickers hardness from 50 to 150 MPa (or 50 to 300 MPa) and 12 to 28 Hv0.2 (or 18 to 110 Hv0.2), respectively, by JIS T 6518 (or JIS T 6517).

A material, from which the resin disk D is made, is not specifically limited. The material is polymethyl methacrylate (PMMA), polycarbonate, polysulfone, polyether sulfone, etc.

The resin disk D may also include a filler such as glass.

Six "access holes 11" for screw fixation are formed in the resin plate 10. Accordingly, the resin plate 10 can be fixed using 6 screws, optionally via abutments, to 6 fixtures embedded in the alveolar bone, thereby improving the stability of the complete dentures in the oral cavity.

The number of access holes 11 that is for fixing using the screws and is formed in the resin plate 10 may be appropriately changed as necessary.

The shape of the resin plate 10 is not particularly limited if machined to have a shape corresponding to the fixture or abutment.

The average inner diameter of the access hole 11 for the screw fixation can be appropriately adjusted depending on the outer diameter of the screw, but is typically 2-5 mm.

A taper may be formed on the support portion of the resin plate 10.

The resin plate 10 may be reinforced by metal wires (metal wires), resin wires (resin wires), or the like.

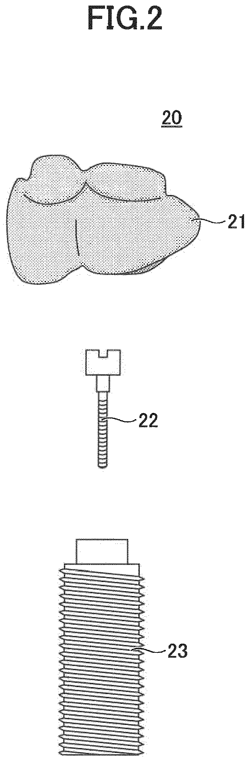

FIG. 2 illustrates an example of the dentures plate system according to the present embodiment.

The dentures plate system 20 includes a resin plate 21 having two access holes formed for screw fixation, two screws 22 used for fixing the resin plate 21, and two fixtures 23 capable of fixing the resin plate 21 with the screws 22.

The resin plate 21 is provided for partial dentures when two back teeth are lost consecutively and is the same as the resin plate 10 except that two access holes for screw fixation are formed.

The number of access holes formed in the resin plate 21 for fixing screws may be appropriately adjusted according to the condition of loss of teeth.

The resin plate 21 is fabricated to correspond to the shape of the upper surface of the fixture 23. Therefore, it is possible to improve the stability of the dentures in the oral cavity.

A material, from which the screw 22 is made, is not specifically limited. For example, the material is ceramics, metals, etc.

The outer diameter of screw 22 is typically 2-5 mm.

The number of screws 22 is the same as the number of access holes for screw fixation formed in the resin plate 21.

A screw hole corresponding to the shape of the screw 22 is formed in the fixture 23.

A material, from which the fixture 23 is made, is not specifically limited. For example, the material is titanium, a titanium alloy, etc.

The number of fixtures 23 is the same as the number of access holes for screw fixation formed in the resin plate 21.

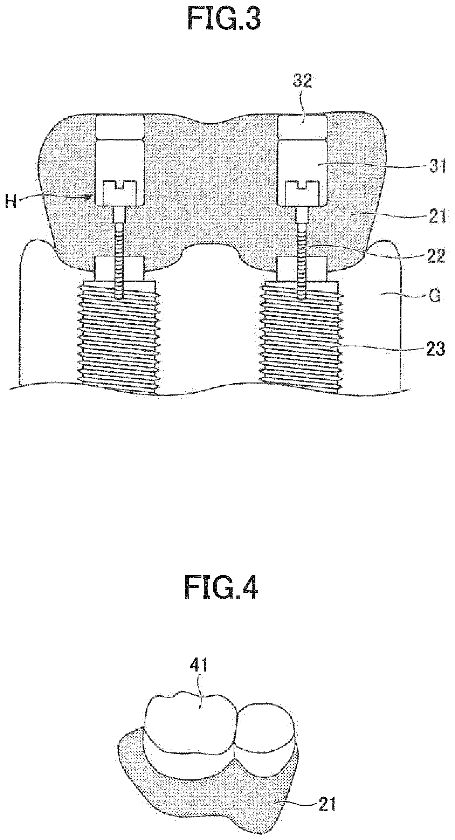

Next, an example of the method of using the dentures plate system 20 will be described with reference to FIG. 3.

First, two fixtures 23 are implanted in the alveolar bone of the portion of gingiva G in which the lost back tooth was generated. After placing the resin plate 21 on two fixtures 23, the resin plate 21 is then fixed with two screws 22. Next, the space of the access hole H of the resin plate 21 fixed with the screw 22 is filled with watte (cotton) 31 and temporarily sealed with temporary sealant 32.

As the temporary sealant 32, for example, Temporary Stopping (manufactured by GC Corporation) can be used.

Finally, the artificial tooth 41 are fixed to the upper portion of the resin plate 21 with cement (see FIG. 4).

The artificial tooth 41 are for the partial dentures when two back teeth are lost in succession. A material, from which the artificial tooth 41 is made, is not specifically limited. For example, ceramics, metals, etc., may be used.

The artificial tooth 41 may have two access holes for screw fixation on an occlusal surface. In this case, the artificial tooth 41 can be fixed with screws.

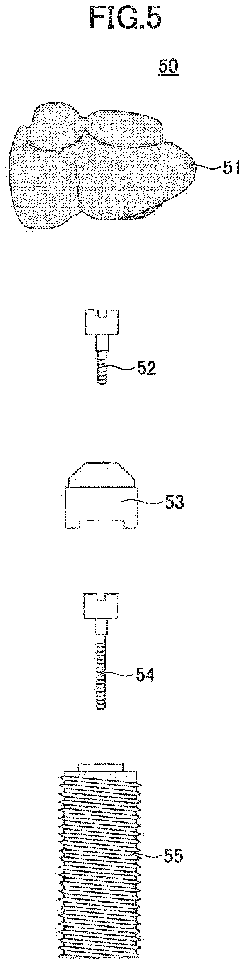

FIG. 5 illustrates another example of the dentures plate system of the present embodiment.

A dentures plate system 50, like the dentures plate system 20, includes a resin plate 51 having two access holes for screw fixation and two screws 52 for use in fixing the resin plate 51.

The dentures plate system 50 further includes two abutments 53 which are capable of fixing the resin plate 51 with the screws 52, two screws 54 which are used to fix abutments 53, and two fixtures 55 which are capable of fixing the abutments 53 with the screws 54.

Because the dentures plate system 50 has the abutment 53, the screw 52 is less likely to break.

The resin plate 51 is the same as the resin plate 21 except that it is machined to correspond to the shape of the top surface of the abutment 53.

A material, from which the screws 52, 54 are made, is not specifically limited. For example, ceramics, metals, etc., may be used.

The outer diameters of the screws 52 and 54 are typically 2-5 mm.

The outer diameter of the screw 52 may or may not be the same as the outer diameter of the screw 54.

The number of the screws 52, 54 is also the same as the number of the access holes for screw fixation formed in the resin plate 51.

The abutment 53 is formed with a screw hole corresponding to the shape of the screw 52.

The abutment 53 may be, for example, an abutment cylinder.

The fixture 55 is the same as the fixture 23 except that a screw hole corresponding to the shape of the screw 54 is formed.

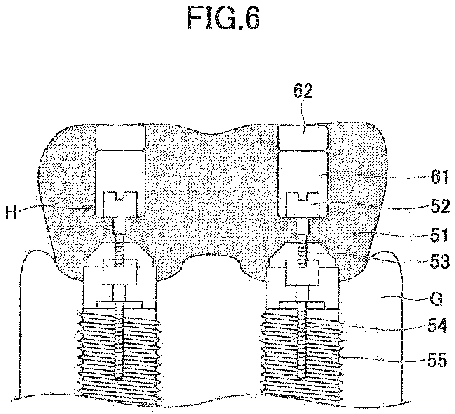

Next, an example of the method of using the dentures plate system 50 will be described with reference to FIG. 6.

First, the two fixtures 55 are implanted in the alveolar bone of the portion of the gingiva G in which the lost back tooth was generated. Next, the abutment 53 is fitted onto each fixture 55 and then fixed with the screw 54 to the abutment 53. In addition, after placing the resin plate 51 on two abutments 53, the resin plate 51 is fixed with the two screws 52. Next, the space of the access hole H of the resin plate 51 fixed with the screws 52 is filled with watte (cotton) 61 and temporarily sealed with temporary sealant 62.

As the temporary sealant 62, for example, Temporary Stopping (manufactured by GC corporation) can be used.

Finally, artificial teeth are fixed on the resin plate 51 using cement, screws, or the like.

This international application claims priority to Japanese Patent Application No. 2017-037654 filed February 28, 2017, and the entire contents of Japanese Patent Application No. 2017-037654 are incorporated herein by reference.

### [Explanation of Symbols]

- 10: Resin plate
- 11: Through hole for screw fixation
- D: Resin disk
- 20, 50: Dentures plate system
- 21, 51: Resin plate
- 22, 52, 54: Screw
- 23, 55: Fixture
- 53: Abutment
- H: Access hole
- 31, 61: Watte (Cotton)
- 32, 62: Temporary sealant
- G: Gingiva
- 41: Artificial tooth

## Claims

1. A resin plate manufactured by processing a resin disk using CAD/CAM and having an access hole formed for fixing a screw.

2. A resin plate comprising:
a resin whose bending strength and Vickers hardness are from 50 to 150 MPa and 12 to 28 Hv0.2 (by JIS T 6518), respectively, or the bending strength and Vickers hardness are from 50 to 300 MPa and 18 to 110 Hv0.2 (by JIS T 6517), respectively, and
an access hole formed for fixing a screw.

3. A dentures plate system comprising:
the resin plate according to claim 1;
the screw configured to fix the resin plate; and
a fixture configured to fix the resin plate using the screw.

4. The dentures plate system according to claim 3, wherein the resin plate is processed to correspond to a shape of the fixture.

5. A resin plate system comprising:
the resin plate according to claim 1;
the first screw used to fix the resin plate;
an abutment configured to fix the resin plate using the first screw;
a second screw configured to fix the abutment; and
a fixture configured to fix the abutment with the second screw.

6. The resin plate system according to claim 5, wherein the resin plate is processed to correspond to a shape of the abutment.
